**Europäisches Patentamt**

**European Patent Office**

**Office européen des brevets**

(11) Numéro de publication : **0 320 443 B1**

(19)

(12) **FASCICULE DE BREVET EUROPEEN**

(45) Date de publication du fascicule du brevet :
**22.07.92 Bulletin 92/30**

(51) Int. Cl.⁵ : **F16J 15/32, F16L 21/02**

(21) Numéro de dépôt : **88810791.9**

(22) Date de dépôt : **18.11.88**

(54) **Joint annulaire.**

(30) Priorité : **10.12.87 CH 4824/87**

(43) Date de publication de la demande :
**14.06.89 Bulletin 89/24**

(45) Mention de la délivrance du brevet :
**22.07.92 Bulletin 92/30**

(84) Etats contractants désignés :
**AT BE DE ES FR GB GR IT LU NL SE**

(56) Documents cités :
**DE-A- 2 010 826**
**US-A- 2 882 073**
**US-A- 3 119 624**
**US-A- 3 218 084**
**US-A- 3 445 121**
**US-A- 3 989 259**

(73) Titulaire : **EXITFLEX S.A.**
**Zone Industrielle Sud**
**CH-1196 Gland (CH)**

(72) Inventeur : **Jean-Prost, Christian**
**Premanon**
**F-39220 Les Rousses (FR)**
Inventeur : **Leisi, Marcel**
**26B, Avenue Tronchet**
**CH-1226 Thonex (CH)**

(74) Mandataire : **Dietlin, Henri**
**Dietlin & Cie S.A. Rue des Epinettes 19**
**CH-1227 Genève (CH)**

**EP 0 320 443 B1**

**Description**

L'invention a trait à un dispositif de jonction étanche de deux pièces entre lesquelles est disposé un joint d'étanchéité et propose plus particulièrement un joint annulaire résistant aux déformations et à l'érosion dues à des produits chimiques, tels que les solvants couramment employés en peinture par exemple.

On connait depuis longtemps des joints annulaires appelés O-rings, destinés à être placés entre deux pièces pour assurer leur étanchéité.

Par le brevet américain US-A-2.882.073 on connaît un joint d'étanchéité pour tube en béton comportant un corps central prolongé par au moins deux lamelles discales parallèles de diamètres différents, dont le pourtour coopère avec une partie cônique pratiquée dans l'autre pièce circulaire de manière à dilater par déformation mécanique la section du joint.

Dans les installations de revêtement au moyen de pistolet de pulvérisation, on est obligé d'utiliser des joints en une matière résistant aux solvants utilisés soit comme dilutifs, soit au moment du nettoyage de l'installation. On a déjà proposé de réaliser des joints de type O-ring en P.T.F.E., mais ceux-ci sont plus onéreux que les joints standard en caoutchouc.

L'invention a pour objet de pallier cet inconvénient et propose un dispositif de jonction étanche de deux pièces de forme générale cylindrique entre lesquelles est disposé un joint d'étanchéité constitué par une pièce annulaire comportant un corps central prolongé par au moins deux lamelles d'étanchéité de diamètres différents dont le pourtour coopère avec une paroi conique pratiquée dans l'une des deux pièces, caractérisé par le fait que les lamelles sont parallèles à un plan perpendiculaire à l'axe central du joint ou légèrement inclinées par rapport à ce plan et par le fait que l'angle de la paroi cônique par rapport à l'axe central correspond à l'angle du cône passant par les périmètres extérieurs de deux lamelles adjacentes par rapport à cet axe central, de manière à ce que le pourtour de chacune des lamelles épouse la forme de la paroi cônique.

Le dessin annexé représente, à titre d'exemple non limitatif, une forme d'exécution de l'objet de la présente invention.

La figure 1 représente une vue de côté d'un tel joint annulaire dans la partie gauche de la figure, alors que la partie droite représente la vue en coupe du joint selon l'invention.

La figure 2 est une vue agrandie de la partie du joint présentée en coupe à la figure 1, le joint étant de surcroît représenté positionné entre les pièces dont il doit assurer l'étanchéité.

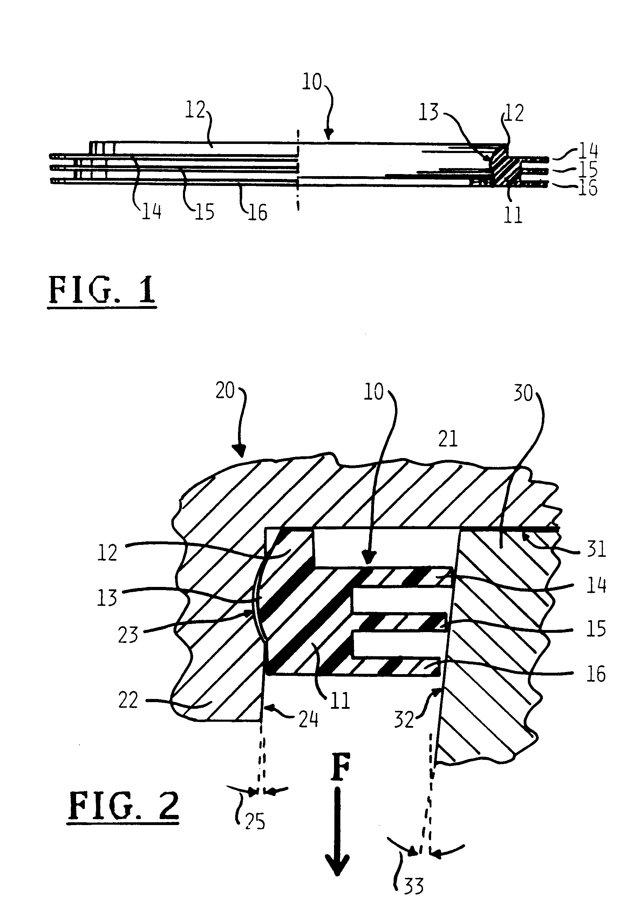

Le joint annulaire 10 représenté au dessin est principalement constitué par une bague 11 présentant un rebord 12 sur l'une de ses faces planes ainsi qu'un arrondi 13 vers l'intérieur. Extérieurement, la bague 11 est constituée de trois lamelles discales parallèles 14, 15 et 16 respectivement. Dans le détail de la figure 2, on remarquera que les diamètres extérieurs des disques 14 à 16 vont en décroissant.

Dans la représentation de la figure 2, on a représenté également une pièce intérieure 20 destinée à être fixée-sur une pièce extérieure 30, toutes deux cylindriques et concentriques. A titre d'exemple, la pièce intérieure 20 peut être constituée par un bouchon destiné à venir fermer un tube extérieur 30. En variante, la pièce intérieure 20 peut être un corps creux constituant un raccord fixé, de manière non représentée au dessin, en bout d'un tube extérieur 30.

La pièce intérieure 20 est de forme générale cylindrique et présente un épaulement transversal 21 dans sa partie supérieure. Sa partie centrale 22 comporte une rainure extérieure 23, de dimensions correspondant sensiblement à l'arrondi intérieur 13 du joint 10. On remarquera encore que la partie centrale 22 de la pièce intérieure 20 présente, dans sa partie inférieure, une partie cônique d'entrée 24 faisant un angle 25 par rapport à l'axe de l'ensemble.

La pièce extérieure 30 présente dans sa partie supérieure un plat 31 destiné à appuyer sur l'épaulement 21 de la pièce intérieure 20. On remarquera encore qu'intérieurement la pièce extérieure 30 présente un cône d'entrée 32, évasé vers l'extérieur d'un angle 33 et destiné à coopérer avec les lamelles discales 14, 15 et 16, de diamètres décroissant comme on l'a déjà mentionné.

Pour monter l'ensemble, le joint annulaire 10 est disposé autour de la partie centrale 22 de la pièce intérieure 20. L'angle 25 du cône d'entrée 24 est destiné à faciliter la mise en place du joint 10. L'arrondi intérieur 13 du joint 10 permet de maintenir ce dernier dans la rainure extérieure 23 pratiquée dans la pièce intérieure 20, au cours des manipulations des composants.

Dans l'exemple représenté au dessin, le joint 10 est destiné à assurer l'étanchéité entre la pièce intérieure 20 et la pièce extérieure 30 lorsqu'une dépression est appliquée dans le sens de la flèche F. On comprend alors le rôle des diamètres décroissant des lamelles discales 14 à 16 qui sont aptes à se déformer légèrement pour venir s'appuyer sur la paroi intérieure du cône d'entrée 32.

Le joint selon l'invention n'est pas limité à la forme représentée au dessin. On pourrait par exemple avoir des lamelles 14 à 16 de diamètre extérieur décroissant, et destinées à coopérer avec un cône inversé par rapport à celui de la figure 2. Cette forme d'exécution conviendrait si une surpression était réalisée entre les pièces 20 et 30.

En variante, on pourrait prévoir de disposer les lamelles vers l'intérieur et la bague annulaire à l'extérieur du joint.

Le joint décrit plus haut peut être obtenu par moulage. Il peut être également réalisé par tout autre procédé d'usinage.

Quant à la matière choisie, il peut s'agir de polyoléfines (par exemple polyéthylène), de polyamides (nylon par exemple), de polyhydrocarbures fluorés (par exemple téflon), de co-polymères de styrène, de butadiène et d'anylonitrile (A.B.S.), toutes ces matières résistant parfaitement aux solvants employés généralement.

## Revendications

1. Dispositif de jonction étanche de deux pièces (20,30) de forme générale cylindrique entre lesquelles est disposé un joint d'étanchéité (10) constitué par une pièce annulaire comportant un corps central (11) prolongé par au moins deux lamelles d'étanchéité (14 à 16) de diamètres différents dont le pourtour coopère avec une paroi conique pratiquée dans l'une des deux pièces, caractérisé par le fait que les lamelles sont parallèles à un plan perpendiculaire à l'axe central du joint ou légèrement inclinées par rapport à ce plan et par le fait que l'angle (33) de la paroi cônique par rapport à l'axe central correspond à l'angle du cône passant par les périmètres extérieurs de deux lamelles (14, 15, 16) adjacentes par rapport à cet axe central, de manière à ce que le pourtour de chacune des lamelles (14 à 16) épouse la forme de la paroi cônique (32).

2. Dispositif selon la revendication 1 destiné à séparer deux chambres à des pressions différentes, caractérisé par le fait que la lamelle présentant le diamètre le plus grand est située du côté du joint où la pression est la plus élevée, de manière à ce la pression tende à appuyer le pourtour de chaque lamelle contre la paroi conique.

3. Dispositif selon la revendication 1 ou 2, caractérisé par le fait que les lamelles sont parallèles.

4. Dispositif selon la revendication 1 ou 2, caractérisé par le fait que les lamelles sont inclinées par rapport au plan dudit joint.

5. Dispositif selon la revendication 1 ou 2, caractérisé par le fait qu'il comporte des moyens de fixation amovible sur l'une des deux pièces.

6. Dispositif selon la revendication 5, caractérisé par le fait qu'il comporte une partie arrondie (13) destinée à coopérer avec une rainure correspondante (23) de ladite pièce.

7. Dispositif selon la revendication 1 ou 2, caractérisé par le fait qu'il comporte des moyens de positionnement par rapport à l'une des deux pièces.

8. Dispositif selon la revendication 7, caractérisé par le fait qu'il comporte un rebord (12) destiné à coopérer avec un épaulement correspondant de ladite pièce.

9. Dispositif selon la revendication 1, caractérisé par le fait qu'il est dans une matière résistant aux solvants.

10. Dispositif selon la revendication 9, caractérisé par le fait que ladite matière est à base de polyoléfines, de polyamides, de polyhydrocarbures fluorés, et/ou de co-polymères de styrène, de butadiène et d'anylonitrile.

## Patentansprüche

1. Eine Vorrichtung für die leckdichte Verbindung von zwei Teilen (20, 30) allgemein zylindrischer Form, zwischen denen eine Dichtung (10) angeordnet ist, die durch ein ringförmiges Teil gebildet wird, das einen zentralen Körper (11) aufweist, an den sich mindestens zwei Dichtlamellen (14 bis 16) unterschiedlichen Durchmessers anschließen, deren Außenprofil mit einer konischen Wand zusammenwirkt, die in eines der beiden Teile eingebracht ist, dadurch gekennzeichnet, daß die Lamellen parallel zu einer Ebene angeordnet sind, die rechtwinklig zur zentralen Achse der Dichtung oder leicht geneigt zu dieser Ebene verlauft, und dadurch daß der Winkel (33) der konischen Wand zur zentralen Achse dem Winkel des Konus entspricht, der durch die äußeren Perimeter der beiden an dieser zentralen Achse angeordneten Lamellen (14, 15, 16) verläuft, so daß sich das Profil jeder der Lamellen (14 bis 16) an die Form der konischen Wand (32) anschmiegt.

2. Eine Vorrichtung nach Anspruch 1, die für die Abtrennung von zwei Kammern mit unterschiedlichem Druck bestimmt ist, dadarch gekennzeichnet, daß die Lamelle mit dem großten Durchmesser auf der Seite der Dichtung angeordnet ist, an der Druck am größten ist, so daß dieser Druck das Profil jeder Lamelle gegen die konische Wand drückt.

3. Eine Vorrichtung nach einem der Ansprüche 1 oder 2, dadurch gekennzeichnet, daß die Lamellen parallel angeordnet sind.

4. Eine Vorrichtung nach einem der Ansprüche 1 oder 2, dadurch gekennzeichnet, daß die Lamellen zur Ebene dieser Dichtung geneigt sind.

5. Eine Vorrichtung nach einem der Ansprüche 1 oder 2, dadurch gekennzeichnet, daß sie an einem der beiden Teile lösliche Befestigungsmittel aufweist.

6. Eine Vorrichtung nach Anspruch 5, dadurch gekennzeichnet, daß sie einen abgerundeten Teil (13) aufweist, der dafür bestimmt ist, mit einer entsprechenden Einkerbung (23) des Teils zusammenzuwirken.

7. Eine Vorrichtung nach einem der Ansprüche 1 oder 2, dadurch gekennzeichnet, daß sir Mittel für die Positionierung zu einem der beiden Teile aufweist.

8. Eine Vorrichtung nach Anspruch 7, dadurch gekennzeichnet, daß sie eine Kante (12) aufweist, die mit einem entsprechenden Ansatz des Teils zusammenwirkt.

9. Eine Vorrichtung nach Anspruche 1, dadurch gekennzeichnet, daß sie aus einem Werkstoff hergestellt ist, der gegen Lösungsmittel fest ist.

10. Eine Vorrichtung nach Anspruch 9, dadurch gekennzeichnet, daß dieser Werkstoff auf der Grundlage von Polyolefinen, Polyamiden, Polyfluorkohlenwasserstoffen und/oder Copolymeren von styrol, Butadien und Anylonitril hergestellt ist.

**Claims**

1. Device for the leakproof joining of two pieces (20, 30) of generally cylindrical shape between which is arranged a leakproofing joint (10) constituted by an annular piece comprising a central body (11) extended by at least two leakproofing blades (14 to 16) of different diameters whose circumference interacts with a conical wall formed in one of the two pieces, characterised in that the blades are parallel to a plane which is perpendicular to the central axis of the joint or are slightly inclined with respect to this plane and in that the angle (33) of the conical wall with respect to the central axis corresponds to the angle of the cone passing through the external perimeters of two adjacent blades (14, 15, 16) with respect to this central axis, such that the circumference of each of the blades (14 to 16) follows the shape of the conical wall (32).

2. Device according to Claim 1 intended to separate two chambers at different pressures, characterised in that the blade exhibiting the largest diameter is situated on the side of the joint where the pressure is highest, such that the pressure tends to press the circumference of each blade against the conical wall.

3. Device according to Claim 1 or 2, characterised in that the blades are parallel.

4. Device according to Claim 1 or 2, characterised in that the blades are inclined with respect to the plane of the said joint.

5. Device according to Claim 1 or 2, characterised in that it comprises movable fixing means on one of the two pieces.

6. Device according to Claim 5, characterised in that it comprises a rounded part (13) intended to interact with a corresponding groove (23) in the said piece.

7. Device according to Claim 1 or 2, characterised in that it comprises means for positioning with respect to one of the two pieces.

8. Device according to Claim 7, characterised in that it comprises a rim (12) intended to interact with a corresponding shoulder in the said piece.

9. Device according to Claim 1, characterised in that it is made of a material which is resistant to solvents.

10. Device according to Claim 9, characterised in that the said material is based on polyolefins, polyamides, fluorinated polyhydrocarbons, and/or copolymers of styrene, butadiene and acrylonitrile.

## FIG. 1

## FIG. 2